# EUROPEAN PATENT APPLICATION

(11) **EP 4 524 066 A1**
(43) Date of publication of application: **19.03.2025**
(21) Application number: 23870600.6
(22) Date of filing: 21.09.2023
(51) Int. Cl.: B65G 37/00, B65G 35/00, B65G 47/74

(54) **CONVEYING CONTROL METHOD AND RELATED DEVICE**

(30) Priority: 30.09.2022 CN 202211208223
(71) Applicant: Hai Robotics Co., Ltd., Shenzhen, Guangdong 518000 (CN)
(72) Inventor: ZHAO, Zhen, Shenzhen, Guangdong 518000 (CN)
(74) Representative: Gulde & Partner
(86) International application number: PCT/CN2023/120518
(87) International publication number: WO 2024/067368

(57) **Abstract**

This application provides a transportation control method and a related apparatus. The method includes: when receiving a target order task, a server controls a traction robot to connect to a truck through an automated engage or disengage mechanism, where the truck is loaded with a material loading container; then controls the traction robot to pull the truck to move to a first target material loading station corresponding to the target order task; controls the traction robot to disconnect from the truck after the traction robot has pulled the truck to the first target material loading station; then determines, according to the target order task, a transporting action of the traction robot for the first target material loading station and a required quantity of material loading containers or empty containers corresponding to the transporting action, where the transporting action includes transporting the required quantity of material loading containers from the truck to the first target material loading station, and/or transporting the required quantity of empty containers from the first target material loading station to the truck; and controls the traction robot to perform the transporting action. In the embodiments of this application, automatic material loading by a truck can be implemented, which helps improve material loading efficiency.

## Description

### CROSS-REFERENCES

This application claims priority to China Patent Application No. 202211208223.8, filed with the China National Intellectual Property Administration on September 30, 2022 and entitled "TRANSPORTATION CONTROL METHOD AND RELATED APPARATUS", which is incorporated herein by reference in its entirety.

### TECHNICAL FIELD

This application relates to the field of data processing technologies, and specifically, to a transportation control method and a related apparatus.

### BACKGROUND OF THE INVENTION

During production processes such as vehicle manufacturing, the replenishment of raw materials to the production line involves a large quantity of container transportation needs. Currently, the replenishment of raw materials is mostly performed using a tractor, which is characterized by a large transportation amount and can meet production requirements. However, currently, the tractor needs to be manually driven during transportation, and goods need to be manually retrieved and placed when the tractor reaches the line side, thus completing line side delivery. Therefore, automation cannot be achieved.

### SUMMARY OF THE INVENTION

Embodiments of this application provide a transportation control method and a related apparatus, to implement automatic material loading by a truck.

According to a first aspect, an embodiment of this application provides a transportation control method, appliable to a server. The server is configured to control a traction robot, and the traction robot includes a robot body configured to transport a container and an automated engage or disengage mechanism configured to detachably connect to a truck. The method includes:
controlling, when receiving a target order task, the traction robot to connect to the truck in a material storage area through the automated engage or disengage mechanism, where the truck is loaded with a first quantity of material loading containers corresponding to the target order task;
controlling, when detecting that the connection between the traction robot and the truck is completed, the traction robot to pull the truck to move to a first target material loading station corresponding to the target order task;
controlling, when detecting that the traction robot has pulled the truck to the first target material loading station, the automated engage or disengage mechanism of the traction robot to disconnect from the truck;
determining, according to the target order task, a transporting action of the traction robot for the first target material loading station and a required quantity of material loading containers or empty containers corresponding to the transporting action, where the transporting action includes transporting the required quantity of material loading containers from the truck to the first target material loading station, and/or transporting the required quantity of empty containers from the first target material loading station to the truck; and
controlling the traction robot to perform the transporting action.

In a possible example, the robot body includes a fork and a plurality of temporary storage locations, the first target material loading station is provided with a first area for placing the material loading container and a second area for placing the empty container, and the controlling the traction robot to perform the transporting action includes:
controlling the traction robot to transport a second quantity of the material loading containers or the empty containers to the plurality of temporary storage locations through the fork, where the second quantity is less than or equal to a quantity of the temporary storage locations; and
when the material loading containers are placed at the temporary storage locations of the traction robot, controlling the traction robot to move from a location of the truck to the first area, and controlling the traction robot to place the second quantity of the material loading containers in the first area through the fork; or
when the empty containers are placed at the temporary storage locations of the traction robot, controlling the traction robot to move from the second area to a location of the truck, and controlling the traction robot to place the second quantity of the material loading containers on the truck through the fork.

In a possible example, when the transporting action is transporting the required quantity of empty containers from the first target material loading station to the truck, the determining, according to the target order task, the transporting action of the traction robot for the first target material loading station and the container quantity corresponding to the transporting action includes:
determining a remaining capacity of the truck according to the target order task and a total capacity of the truck; and
when the remaining capacity of the truck is greater than or equal to the quantity of empty containers at the first target material loading station, determining that the container quantity corresponding to the transporting action is the quantity of empty containers at the first target material loading station; or
when the remaining capacity of the truck is less than the quantity of empty containers at the first target material loading station, determining that the container quantity corresponding to the transporting action is the remaining capacity of the truck.

In a possible example, before the controlling the traction robot to connect to the truck in the material storage area through the automated engage or disengage mechanism, the method includes:
determining the first quantity of material loading containers according to the target order task; and
controlling the traction robot to transport the first quantity of material loading containers from a silo to the truck in the material storage area.

In a possible example, the determining the first quantity of material loading containers according to the target order task includes:
obtaining the quantity of to-be-loaded stations and a loading quantity for each to-be-loaded station according to the target order task, where the to-be-loaded station is located in a production area, the production area includes a plurality of production stations, the to-be-loaded station is at least one of the plurality of production stations, and the first target material loading station is the to-be-loaded station; and
if the quantity of to-be-loaded stations is equal to 1, determining a loading quantity for the to-be-loaded station as the first quantity; or
if the quantity of to-be-loaded stations is greater than 1, calculating a sum of loading quantities for the to-be-loaded stations as the first quantity.

In a possible example, before the controlling the traction robot to pull the truck to the first target material loading station corresponding to the target order task, the method further includes:
determining locations of all to-be-loaded stations according to the target order task; and
generating a moving route according to the locations of all the to-be-loaded stations, where the traction robot pulls the truck to each of the to-be-loaded stations according to the moving route.

In a possible example, after the controlling the traction robot to perform the transporting action, the method further includes:
controlling, when the transporting action is completed, the traction robot to connect to the truck through the automated engage or disengage mechanism; and
controlling, according to the moving route, the traction robot to pull the truck to move to a second target material loading station, or controlling the traction robot to pull the truck to return to the material storage area, where the second target material loading station is one of the to-be-loaded stations.

According to a second aspect, an embodiment of this application provides a transportation control method, applied to a traction robot. The traction robot is provided with an automated engage or disengage mechanism. The method includes:
connecting to a truck through an automated engage or disengage mechanism according to control of a server, where the truck is loaded with a first quantity of material loading containers corresponding to a target material loading order;
pulling, according to control of the server, the truck to move to a first target material loading station corresponding to the target material loading order;
when the truck has been pulled to the first target material loading station, disconnecting the automated engage or disengage mechanism from the truck according to control of the server; and
performing a transporting action according to control of the server, where the transporting action includes transporting a required quantity of material loading containers corresponding to the transporting action from the truck to the first target material loading station, and/or transporting a required quantity of empty containers corresponding to the transporting action from the first target material loading station to the truck.

According to a third aspect, an embodiment of this application provides a transportation control apparatus, used in a server. The apparatus includes:
a first control unit, configured to control, when receiving a target order task, the traction robot to connect to the truck in a material storage area through an automated engage or disengage mechanism, where the truck is loaded with a first quantity of material loading containers corresponding to the target order task;
a second control unit, configured to control, when detecting that the connection between the traction robot and the truck is completed, the traction robot to pull the truck to move to a first target material loading station corresponding to the target order task;
a third control unit, configured to control, when detecting that the traction robot has pulled the truck to the first target material loading station, the automated engage or disengage mechanism of the traction robot to disconnect from the truck;
a determining unit, configured to determine, according to the target order task, a transporting action of the traction robot for the first target material loading station and a required quantity of material loading containers or empty containers corresponding to the transporting action, where the transporting action includes transporting the required quantity of material loading containers from the truck to the first target material loading station, and/or transporting the required quantity of empty containers from the first target material loading station to the truck; and
a fourth control unit, configured to control the traction robot to perform the transporting action.

According to a fourth aspect, an embodiment of this application provides a transportation control apparatus, used in a traction robot. The apparatus includes:
a first processing unit, configured to connect to a truck through an automated engage or disengage mechanism according to control of a server, where the truck is loaded with a first quantity of material loading containers corresponding to a target material loading order;
a second processing unit, configured to pull, according to control of the server, the truck to move to a first target material loading station corresponding to the target material loading order;
a third processing unit, configured to: when the truck has been pulled to the first target material loading station, disconnect the automated engage or disengage mechanism from the truck according to control of the server; and
a fourth processing unit, configured to perform the transporting action according to control of the server, where the transporting action includes transporting a required quantity of material loading containers corresponding to the transporting action from the truck to the first target material loading station, and/or transporting a required quantity of empty containers corresponding to the transporting action from the first target material loading station to the truck.

According to a fifth aspect, an embodiment of this application provides a server, including a processor, a memory, and a communication interface. The processor, the memory, and the communication interface are connected to each other. The communication interface is configured to receive or send data, the memory is configured to store application program code for the server to perform any method according to the first aspect, and the processor is configured to perform any method according to the first aspect.

According to a sixth aspect, an embodiment of this application provides a traction robot, including a processor, a memory, and a communication interface. The processor, the memory, and the communication interface are connected to each other. The communication interface is configured to receive or send data, the memory is configured to store application program code for a server to perform any method according to the second aspect, and the processor is configured to perform any method according to the second aspect.

According to a seventh aspect, an embodiment of this application provides a computer-readable storage medium. The computer-readable storage medium stores a computer program used for electronic data exchange, and the computer program causes a computer to perform some or all of the steps described in any method according to the first aspect or the second aspect in this embodiment of this application.

According to an eighth aspect, an embodiment of this application provides a computer program product, including a computer program. The computer program, when being executed by a processor, implements some or all of the steps described in any method according to the first aspect or the second aspect in this embodiment of this application. The computer program product may be a software installation package.

It can be learned that in the embodiments of this application, when receiving the target order task, the server controls the traction robot to connect to the truck through the automated engage or disengage mechanism, where the truck is loaded with the first quantity of material loading containers corresponding to the target order task; then controls, when detecting that the connection between the traction robot and the truck is completed, the traction robot to pull the truck to move to the first target material loading station corresponding to the target order task; controls the traction robot to disconnect from the truck after the traction robot has pulled the truck to the first target material loading station; then determines, according to the target order task, the transporting action of the traction robot for the first target material loading station and the container quantity corresponding to the transporting action, where the transporting action includes transporting the material loading container corresponding to the container quantity from the truck to the first target material loading station, and/or transporting the empty container corresponding to the container quantity from the first target material loading station to the truck; and then controls the traction robot to perform the transporting action. It can be learned that in this solution, in a process of completing a material loading requirement and an empty container transporting requirement that correspond to the target order task, both the material loading requirement and the empty container transporting requirement are completed by the traction robot in cooperation with the truck, and no person participates in the whole process. Automatic transporting and carrying of the material loading container and the empty container are implemented, thereby reducing labor costs.

### BRIEF DESCRIPTION OF DRAWINGS

To describe the technical solutions of the embodiments of this application or the related art more clearly, the accompanying drawings required for describing the embodiments or the related art are briefly introduced below. Apparently, the accompanying drawings in the following description show merely some embodiments of this application, and a person of ordinary skill in the art may still derive other drawings from these accompanying drawings without creative efforts.
FIG. 1 is a schematic architectural diagram of a transportation control system according to an embodiment of this application.
FIG. 2 is a schematic diagram of a location of a device in a transportation control system according to an embodiment of this application.
FIG. 3 is a schematic structural diagram of an electronic device according to an embodiment of this application.
FIG. 4 is a schematic flowchart of a transportation control method according to an embodiment of this application.
FIG. 5 is a schematic structural diagram of a traction robot according to an embodiment of this application.
FIG. 6 is a schematic structural diagram of a truck according to an embodiment of this application.
FIG. 7 is a schematic composition structural diagram of a transportation control apparatus according to an embodiment of this application.
FIG. 8 is a schematic composition structural diagram of another transportation control apparatus according to an embodiment of this application.
FIG. 9 is a schematic composition structural diagram of still another transportation control apparatus according to an embodiment of this application.
FIG. 10 is a schematic composition structural diagram of yet another transportation control apparatus according to an embodiment of this application.

### DETAILED DESCRIPTION

To make a person skilled in the art understand the technical solutions in this application better, the following clearly and completely describes the technical solutions in embodiments of this application with reference to the accompanying drawings in embodiments of this application. Apparently, the described embodiments are merely a part rather than all of embodiments of this application. All other embodiments obtained by a person skilled in the art based on embodiments of this application without creative efforts shall fall within the protection scope of this application.

In the specification, claims, and accompanying drawings of this application, the terms "first", "second", or the like are intended to distinguish between different objects but do not indicate a particular order. In addition, the terms "include", "have", and any variant thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

"Embodiment" mentioned in the specification means that particular features, structures, or characteristics described with reference to the embodiment may be included in at least one embodiment of this application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

The embodiments of this application are described below with reference to the accompanying drawings.

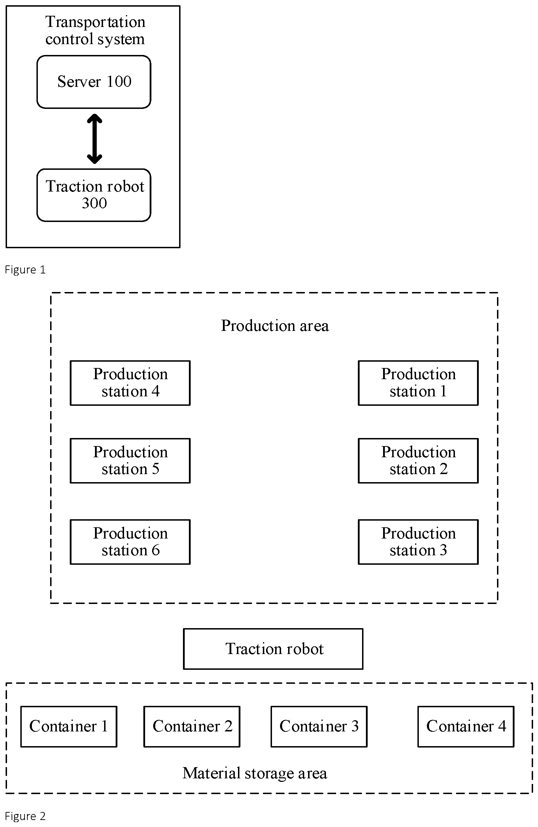

FIG. 1 is a schematic architectural diagram of a transportation control system according to an embodiment of this application. The transportation control system may specifically include a server 100 and a traction robot 300. The server may control an action of the traction robot, for example, control the traction robot to move to a specific location (for example, a location of a truck in a material storage area, or a specific shelving unit at a production station in a production area), control the traction robot to connect to a truck or be disconnected from a truck, control the traction robot to obtain a material loading container loaded with goods from a specific truck, control the traction robot to obtain an empty container from a specific shelving unit at a production station in the production area, or control the traction robot to place a material loading container or an empty container carried by the traction robot at a specific location. The traction robot may perform a corresponding operation according to control of the server.

Specifically, the server may be communicatively connected to the traction robot. A manner of controlling the traction robot by the server may be specifically sending a control instruction to the traction robot. The control instruction is used for indicating an operation that needs to be performed by the traction robot. After receiving the control instruction, the traction robot may implement the corresponding operation according to the control instruction.

In particular, when receiving a target order task, the server may control the traction robot to connect to a truck through an automated engage or disengage mechanism; control the traction robot to pull the truck to move to a first target material loading station corresponding to the target order task; then control the traction robot to disconnect from the truck; and thus control the traction robot to perform a transporting action corresponding to the target order task at a first target material loading station. The transporting action of the traction robot for the first target material loading station and the required quantity of material loading containers or empty containers corresponding to the transporting action are determined by the server according to the target order task. The transporting action includes transporting the required quantity of material loading containers from the truck to the first target material loading station, and/or transporting the required quantity of empty containers from the first target material loading station to the truck.

A whole process of transporting a material loading container and an empty container that correspond to the target order task is completed by the traction robot in cooperation with the truck, and no person participates in the whole process. Therefore, automatic transporting and carrying of the material loading container and the empty container are implemented, thereby reducing labor costs.

In addition, referring to a schematic diagram of a location of a device in the transportation control system shown in FIG. 2, a material storage area is an area for storing a truck. In the material storage area, the truck may unload an empty container on the truck, and load a material loading container for a target order task. The material storage area includes at least one truck. When there are a plurality of trucks in the material storage area, each truck may complete an empty container unloading requirement and a material loading container loading requirement for different target order tasks in the material storage area. Certainly, in another embodiment, the truck in the material storage area may alternatively be a truck that has completed loading on the material loading container. In this case, the material storage area is a waiting area of the truck, and the truck may directly wait to connect to a traction robot in the material storage area.

Further referring to FIG. 2, a production area is an area in which a production line is located. The production area may include at least one production line, one production line may include at least one production station, and a first target station is a production station.

In addition, the transportation control system may further include the traction robot. Correspondingly, according to the control of the server, the traction robot may be connected to a truck that is located in the material storage area and that corresponds to the target order task through an automated engage or disengage mechanism, pull the truck to move to a first target material loading station corresponding to the target order task, disconnect the automated engage or disengage mechanism from the truck, transport a material loading container on the truck to a first shelving unit of the first target material loading station, transport an empty container on a second shelving unit of the first target material loading station to the truck, and the like. Specifically, the production station in the production area is mainly used for storing a material loading container loaded with a material or storing an empty container in which a material has been used. The production station may be, for example, arranged near the production line, and a main function of the production station is to support uninterrupted production of the production line. The traction robot may pull the truck in the material storage area to move to the production area, to transport a material loading container loaded by the truck to the production line for use of the production line (that is, obtain a production material needed by the production line from the material loading container). After the production line uses the production material, an empty container in which the material has been used may be transported to the truck by the traction robot again, so that the empty container is transported back to the material storage area by pulling the truck.

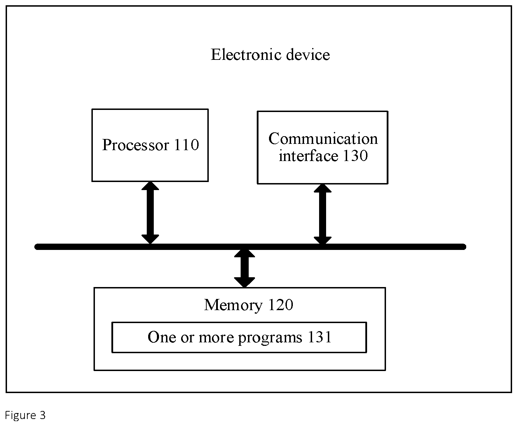

A composition structure of any electronic device (for example, the server or the traction robot) in this application may be shown in FIG. 3. The electronic device may include a processor 110, a memory 120, a communication interface 130, and one or more programs 121. The one or more programs 121 are stored in the memory 120 and configured to be executed by the processor 110, and the one or more programs 121 include instructions for performing any step in the foregoing method embodiments. The communication interface 130 is configured to support communication between the electronic device and another device. During specific implementation, the processor 110 is configured to perform any step performed by the electronic device in the following method embodiments, and when performing data transmission such as sending, may selectively invoke the communication interface 130 to complete a corresponding operation. It should be noted that the foregoing schematic structural diagram of the electronic device is merely an example, and more or fewer components may be specifically included. This is not uniquely limited herein.

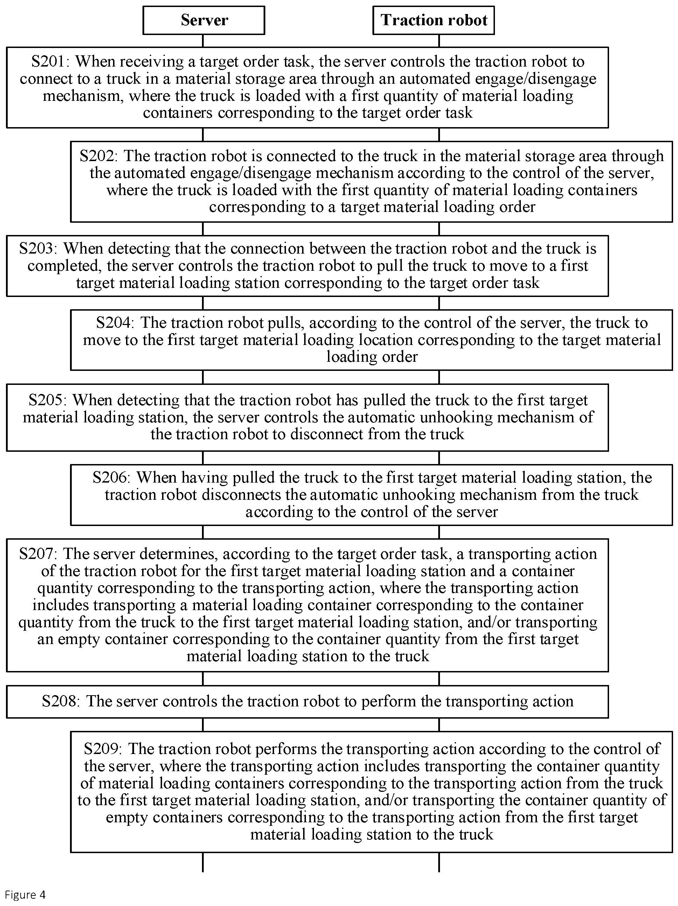

FIG. 4 is a schematic flowchart of a transportation control method according to an embodiment of this application. The transportation control method may be applied to the transportation control system shown in FIG. 1. The transportation control system includes a server and a traction robot. The server is configured to control the traction robot. The traction robot includes a robot body configured to transport a container and an automated engage or disengage mechanism configured to be detachably connected to a truck. As shown in FIG. 4, the transportation control method includes the following operations.

In block S201: When receiving a target order task, the server controls the traction robot to connect to the truck in a material storage area through the automated engage or disengage mechanism, where the truck is loaded with a first quantity of material loading containers corresponding to the target order task.

The target order task may include location information of at least one to-be-loaded station, location information of a material loading container on the truck, location information of an empty container at the to-be-loaded station, a required quantity of material loading containers corresponding to the to-be-loaded station, a quantity of to-be-transported empty containers at the to-be-loaded station, and the like. Therefore, the server controls the traction robot to obtain a material loading container or an empty container at a corresponding location and transport the material loading container or the empty container to a corresponding location. In other words, one target order task may be an order placement requirement of one to-be-loaded station. In this case, one target order task corresponds to one to-be-loaded station. Alternatively, one target order task may include sub-orders generated by order placement of a plurality of to-be-loaded stations. In this case, one target order task corresponds to order placement requirements of the plurality of to-be-loaded stations. Where "a plurality" means two or more than two.

The to-be-loaded station is a production station. For example, referring to FIG. 2, the target order task may include sub-orders generated by order placement of two to-be-loaded stations, and the two to-be-loaded stations may be respectively a production station 1 and a production station 3. A required quantity of material loading containers corresponding to the production station 1 is 2, and a quantity of to-be-transported empty containers is 1. A required quantity of material loading containers corresponding to the production station 3 is 3, and a quantity of to-be-transported empty containers is 2.

Specifically, the empty container may be an empty container at the to-be-loaded station, to reduce a moving range of the traction robot and improve transportation efficiency. Certainly, as needed by production, the target order task may alternatively include a to-be-unloaded empty container at another production station, to meet an actual production and transportation requirement.

The automated engage or disengage mechanism may be connected to the truck through magnetic connection, clamping, or the like. This is not further limited herein.

When the target order task corresponds to one to-be-loaded station, the quantity of material loading containers loaded by the truck is a required quantity of material loading containers corresponding to the to-be-loaded station (that is, the first quantity is the required quantity of material loading containers corresponding to the to-be-loaded station). When the target order task corresponds to a plurality of to-be-loaded stations, the quantity of material loading containers loaded by the truck is a sum of required quantities of material loading containers corresponding to the to-be-loaded stations included in the target order task (that is, the first quantity is the sum of the required quantities of material loading containers corresponding to the to-be-loaded stations). For example, when the target order task includes sub-orders generated by order placement of two to-be-loaded stations, required quantities of material loading containers respectively corresponding to the two sub-orders are 2 and 3, and the first quantity corresponding to the target order task is 5.

All operations performed by the server in block S201 to block S209 may be performed by the server 100 in FIG. 1.

During specific implementation, the server may receive a plurality of target order tasks, and to-be-loaded stations included in the plurality of target order tasks may intersect or overlap (referring to FIG. 2, for example, when to-be-loaded stations included in a first target order task are the production station 1 and the production station 2, to-be-loaded stations included in a second target order task may be the production station 1 and the production station 2, the to-be-loaded stations included in the second target order task may be the production station 1 and the production station 3, or the to-be-loaded stations included in the second target order task may be the production station 3 and the production station 4). When the transportation control system includes one traction robot and at least one truck, the server may control the traction robot to connect to the at least one truck to sequentially complete the plurality of target order tasks. When the transportation control system includes a plurality of traction robots and a plurality of trucks, the server may control the plurality of traction robots to connect to corresponding trucks respectively to simultaneously complete the plurality of target order tasks.

During specific implementation, the first quantity corresponding to the target order task should be less than a carrying capacity of the truck. When the quantity of material loading containers required by a production station is greater than the carrying capacity of the truck, the quantity of material loading containers required by the production station may be split into a plurality of target order tasks.

In block S202: The traction robot is connected to the truck in the material storage area through the automated engage or disengage mechanism according to the control of the server, where the truck is loaded with the first quantity of material loading containers corresponding to a target material loading order.

During specific implementation, the first quantity of material loading containers corresponding to the target order task are all stored on the truck. The traction robot may move to a location of the truck corresponding to the target order task in the material storage area according to the control of the server, and is connected to the truck through the automated engage or disengage mechanism.

In block S203: When detecting that the connection between the traction robot and the truck is completed, the server controls the traction robot to pull the truck to move to a first target material loading station corresponding to the target order task.

The first target material loading station is any production station in the production area, and is also one of all to-be-loaded stations included in the target order task.

It may be understood that the traction robot may move according to the control of the server. After the traction robot is connected to the truck, the traction robot may drive the truck to move together when moving.

In block S204: The traction robot pulls, according to the control of the server, the truck to move to the first target material loading location corresponding to the target material loading order.

In block S205: When detecting that the traction robot has pulled the truck to the first target material loading station, the server controls the automated engage or disengage mechanism of the traction robot to disconnect from the truck.

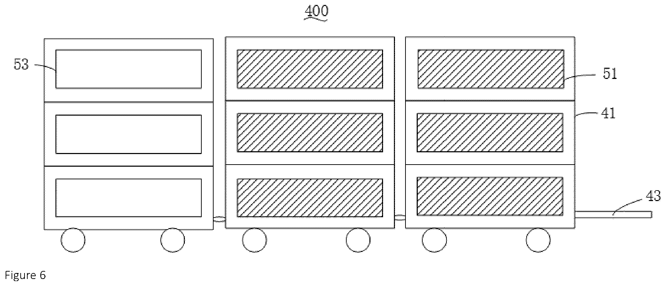

During specific implementation, referring to FIG. 6, the truck may include a plurality of compartments. A specific quantity of compartments may be set according to a requirement, to improve a carrying capacity of the truck. After the traction robot reaches the first target material loading station, the server controls the traction robot to disconnect from the truck, so that the traction robot can retrieve the material loading container on the truck and transport the material loading container to the first target material loading station, or the traction robot can retrieve an empty container at the first target material loading station and transport the empty container to the truck.

In block S206: When pulling the truck to reach the first target material loading station, the traction robot disconnects the automated engage or disengage mechanism from the truck according to the control of the server.

In block S207: The server determines, according to the target order task, a transporting action of the traction robot for the first target material loading station and a required quantity of material loading containers or empty containers corresponding to the transporting action, where the transporting action includes transporting the required quantity of material loading containers from the truck to the first target material loading station, and/or transporting the required quantity of empty containers from the first target material loading station to the truck.

The required quantity is a required quantity of material loading containers for the first target material loading station in the target order task, or a required quantity of empty containers to be unloaded for the first target material loading station in the target order task.

When the traction robot performs the transporting action, the traction robot transports at least one material loading container or empty container at a single time.

Each production station may be provided with a first shelving unit for placing the material loading container and a second shelving unit for placing the empty container. That the traction robot transports the required quantity of material loading containers from the truck to the first target material loading station means that the traction robot transports the material loading container from the truck to a first shelving unit of the first target material loading station. That the traction robot transports the required quantity of empty container from the first target material loading station to the truck means that the traction robot transports the empty container from a second shelving unit to the truck. The first shelving unit and the second shelving unit may be different shelving units, or may be a same shelving unit. This is not further limited herein. When the first shelving unit and the second shelving unit are the same shelving unit, the shelving unit is divided into an area for storing the empty container and an area for storing the material loading container, so that it is convenient for the traction robot to perform identification, to transport the material loading container to the area corresponding to the material loading container, and obtain the empty container from the area corresponding to the empty container.

During specific implementation, the traction robot may transport only the material loading container to the first target material loading station, the traction robot may obtain only the empty container from the first target material loading station, or the traction robot may transport the material loading container to the first target material loading station and also obtain the empty container from the first target material loading station. This may be specifically set based on a production situation of the first target material loading station.

In block S208: The server controls the traction robot to perform the transporting action.

In block S209: The traction robot performs the transporting action according to the control of the server, where the transporting action includes transporting the required quantity of material loading containers from the truck to the first target material loading station, and/or transporting the required quantity of empty containers from the first target material loading station to the truck.

In block S202, block S204, block S06, and block S209, after completing each operation according to the control of the server, the traction robot may send a notification to the server to notify the server that the operation corresponding to the step is completed, so that the server can continue to send a control instruction for a subsequent operation to the control traction robot, to ensure reliability of controlling the traction robot by the server.

It can be learned that in the embodiments of this application, when receiving the target order task, the server controls the traction robot to connect to the truck through the automated engage or disengage mechanism, where the truck is loaded with the first quantity of material loading containers corresponding to the target order task; then controls, when detecting that the connection between the traction robot and the truck is completed, the traction robot to pull the truck to move to the first target material loading station corresponding to the target order task; controls the traction robot to disconnect from the truck after the traction robot has pulled the truck to the first target material loading station; then determines, according to the target order task, the transporting action of the traction robot for the first target material loading station and the required quantity of material loading containers or empty containers corresponding to the transporting action, where the transporting action includes transporting the required quantity of material loading containers from the truck to the first target material loading station, and/or transporting the required quantity of empty containers from the first target material loading station to the truck; and then controls the traction robot to perform the transporting action. It can be learned that in this solution, in a process of completing a material loading requirement and an empty container transporting requirement that correspond to the target order task, both the material loading requirement and the empty container transporting requirement are completed by the traction robot in cooperation with the truck, and no person participates in the whole process. Automatic transporting and carrying of the material loading container and the empty container are implemented, thereby reducing labor costs.

In a possible example, the robot body includes a fork and a plurality of temporary storage locations, the first target material loading station is provided with a first area for placing the material loading container and a second area for placing the empty container, and the controlling the traction robot to perform the transporting action includes: controlling the traction robot to transport a second quantity of the material loading containers or the empty containers to the plurality of temporary storage locations through the fork, where the second quantity is less than or equal to the quantity of the temporary storage locations; and when the material loading containers are placed at the temporary storage locations of the traction robot, controlling the traction robot to move from a location of the truck to the first area, and controlling the traction robot to place the second quantity of the material loading containers in the first area through the fork; or when the empty containers are placed at the temporary storage locations of the traction robot, controlling the traction robot to move from the second area to a location of the truck, and controlling the traction robot to place the second quantity of the material loading containers on the truck through the fork.

The fork is configured to transport the material loading container or the empty container. In other words, the fork is configured to perform operations such as transporting the material loading container on the truck to the temporary storage location of the traction robot, transporting the material loading container at the temporary storage location to the first area of the first target material loading station, transporting the empty container in the second area of the first target material loading station to the temporary storage location, and transporting the empty container at the temporary storage location to the truck.

The temporary storage location is used for temporarily storing the material loading container or the empty container. In other words, in a transportation process in which the traction robot moves from the location of the truck at the first target material loading station to the first area of the first target material loading station and moves from the second area of the first target material loading station to the location of the truck, the temporary storage location is used for temporarily storing the material loading container or the empty container.

The second quantity refers to a quantity of material loading containers or empty containers placed at the temporary storage locations of the traction robot, that is, the quantity of material loading containers or empty containers transported by the traction robot at a single time.

Specifically, when a first shelving unit for placing the material loading container and a second shelving unit for placing the empty container are arranged at the first target material loading station, if the first shelving unit and the second shelving unit are different shelving units, the first shelving unit is placed in the first area, and the second shelving unit is placed in the second area. If the first shelving unit and the second shelving unit are a same shelving unit, both the first area and the second area are areas in which the shelving unit is located.

Specifically, when the traction robot can transport the required quantity of material loading containers or empty containers corresponding to the first target material loading station in the target order task at one time, the second quantity is equal to the required quantity corresponding to the first target material loading station in the target order task. In this case, the second quantity is less than or equal to the quantity of temporary storage locations of the traction robot. When the traction robot cannot transport the required quantity of material loading containers or empty containers corresponding to the first target material loading station in the target order task at one time, the second quantity is less than or equal to the quantity of temporary storage locations of the traction robot. In other words, when the container quantity of material loading containers or empty containers at the first target material loading station is greater than the quantity of temporary storage locations of the traction robot, the quantity of material loading containers or empty containers that are transported by the traction robot at a single time may be at most the quantity of temporary storage locations of the traction robot. In this case, the required quantity of material loading containers or empty containers corresponding to the first target material loading station may be transported in batches by the traction robot.

For example, it is assumed that the traction robot has five temporary storage locations. When the required quantity of material loading containers or empty containers corresponding to the first target material loading station is 4, the second quantity is 4. In this case, the material loading container is used as an example. The traction robot may first transport four material loading containers from the truck to the temporary storage locations through the fork, then move to the first area of the first target material loading station, and then transport the four material loading containers at the temporary storage locations to the first shelving unit in the first area through the fork. When the required quantity of material loading containers or empty containers corresponding to the first target material loading station is 7, the empty container is used as an example, and the traction robot may first transport five empty containers from the second shelving unit in the second area of the first target material loading station to the temporary storage locations through the fork, then move to the location of the truck, then place the five empty containers on the truck through the fork, then move to the second area, then transport two empty containers from the second shelving unit in the second area to the temporary storage locations through the fork, and then repeat the steps to place the two empty containers on the truck. In this case, the second quantity is 5 when the traction robot performs first transporting, and the second quantity is 2 when the traction robot performs second transporting.

During specific implementation, when the required quantity of material loading containers or empty containers is greater than the quantity of temporary storage locations, the quantity of containers of a single transporting by the traction robot may be evenly distributed while ensuring that the quantity of times of transporting by the traction robot is as small as possible. In this way, transportation efficiency of the traction robot is ensured, and an increase in energy consumption of the traction robot caused by an excessive transporting load of the traction robot at a time can be avoided. The even distribution means that a difference between quantities transported by the traction robot each time is not greater than a preset value. The preset value may be set according to an actual transporting capacity of the traction robot. For example, when the traction robot has five temporary storage locations, the preset value may be 1. If the required quantity of empty containers corresponding to the first target material loading station is 7, it can be learned from the quantity of temporary storage locations of the traction robot that the traction robot needs to perform transporting for at least two times to transport the seven empty containers to the truck. In this case, to ensure the transportation efficiency and reduce a load of the traction robot for a single transportation, the traction robot may transport four empty containers for the first time and transport three empty containers for the second time.

It can be learned that, in this example, the traction robot is provided with a plurality of temporary storage locations, so that the traction robot can transport a plurality of material loading containers or empty container at a single time, to reduce the quantity of times of transporting by the traction robot and improve the transportation efficiency of the traction robot.

In a possible example, when the transporting action is transporting the required quantity of empty containers from the first target material loading station to the truck, the determining, according to the target order task, the transporting action of the traction robot for the first target material loading station and the required quantity of the empty containers includes: determining a remaining capacity of the truck according to the target order task and a total capacity of the truck; and when the remaining capacity of the truck is greater than or equal to the quantity of empty containers at the first target material loading station, determining that the required quantity of empty containers is the quantity of empty containers at the first target material loading station; or when the remaining capacity of the truck is less than the quantity of empty containers at the first target material loading station, determining that the required quantity is the remaining capacity of the truck.

The total capacity of the truck is the total quantity of locations at which the material loading containers and the empty containers may be placed on the truck. The remaining capacity of the truck is the remaining quantity of containers that can be carried by the truck and obtained by subtracting the quantity of currently loaded material loading containers and the quantity of currently loaded empty containers from the total capacity of the truck.

During specific implementation, when both the material loading container and the empty container need to be transported for the first target material loading station, the server may first control the traction robot to transport the required quantity of material loading containers corresponding to the first target material loading station from the truck to the first target material loading station, and then transport the corresponding required quantity of empty containers from the first target material loading station to the truck. The required quantity of material loading containers may be different from the required quantity of empty containers.

During specific implementation, the server may first determine a remaining capacity of the truck before the truck moves to the first target material loading station, and then obtain a container quantity of material loading containers required for the first target station. A sum of the remaining capacity of the truck before the truck moves to the first target material loading station and the required quantity of material loading containers required for the first target station is the remaining capacity of the truck corresponding to the first target material loading station.

During specific implementation, the traction robot may transport, from the first target material loading station, empty containers whose maximum quantity is the remaining capacity of the truck corresponding to the first target material loading station to the truck, to satisfy a transporting capacity of the truck and ensure safety and reliability of transportation. In other words, the quantity of empty containers that can be carried for the first target material loading station to the truck should be less than or equal to the remaining capacity of the truck corresponding to the first target material loading station. For example, it is assumed that there are 3 remaining capacities of the truck before the truck moves to the first target material loading station, and the required quantity of material loading containers required for the first target station is 4, there are seven remaining capacities of the truck corresponding to the first target material loading station. In this case, if the quantity of empty containers stored at the first target material loading station is less than or equal to 7, all the empty containers stored at the first target material loading station can be transported to the truck by the traction robot. If the quantity of empty containers stored at the first target material loading station is greater than 7, the traction robot can transport only seven empty containers from the first target material loading station to the truck.

During specific implementation, a corresponding remaining capacity of the truck when the truck moves to each to-be-loaded station in the target order task may be determined in any process before an empty container corresponding to the to-be-loaded station is transported. This is not further limited herein. For example, the corresponding remaining capacity of the truck when the truck moves to each to-be-loaded station in the target order task may be determined before the traction robot is connected to the truck in the material storage area, determined when the traction robot pulls the truck to move, or the like. For example, the quantity of empty containers that can be transported from the first target material loading station may be determined when the traction robot moves to the first target material loading station, may be determined after the material loading containers are transported to the first target material loading station, or the like.

It can be learned that in this example, the remaining capacity of the truck is determined before the empty container is transported, so that the empty container can be transported away from the first target material loading station according to the determined remaining capacity of the truck to the maximum extent, and safety and reliability of pulling, by the traction robot, the truck to move and load can be ensured. In addition, in this example, in a process of transporting the material loading container to the to-be-loaded station, a requirement of transporting the empty container from the to-be-loaded station according to the remaining capacity of the truck is attached, so that in the entire transportation process, transporting the material loading container is a main task, to ensure production requirements of various production lines.

In a possible example, before the controlling the traction robot to connect to the truck in the material storage area through the automated engage or disengage mechanism, the method includes: determining the first quantity of material loading containers according to the target order task; and controlling the traction robot to transport the first quantity of material loading containers from a silo to the truck in the material storage area.

The silo is a space area for storing the material loading container and for performing work such as adding a material to an empty container to form a material loading container.

During specific implementation, the server may first control the traction robot to transport the first quantity of material loading containers from the silo to the truck. After loading by the truck is completed, the server controls the traction robot to connect to the truck, to pull the truck to move.

It can be learned that in this example, under the control of the server, the traction robot transports the first quantity of material loading containers corresponding to the target order task from the silo to the truck, so that an automatic loading process of the truck can be further implemented, thereby reducing labor costs.

In another embodiment, transporting the first quantity of material loading containers from the silo to the truck may alternatively be completed manually or by another device. For example, the transportation control system may further include a first transport robot. The first transport robot may transport the first quantity of material loading containers corresponding to the target order task from the silo to the truck under control of the server.

Further, the transportation control system may further include a second transport robot. The second transport robot may transport an empty container on the returned truck to the silo under control of the server, so that the empty container waits for a material to be added in the silo.

It can be learned that in the transportation control system, the first transport robot and the second transport robot that are different from the traction robot are configured to transport the material loading container to the silo and transport the empty container to the silo, so that the entire automatic loading process of the production line can be implemented, and transportation efficiency and production efficiency can be improved, thereby ensuring that the production line can be loaded in time.

In a possible example, the determining the first quantity of material loading containers according to the target order task includes: obtaining the quantity of to-be-loaded stations and the loading quantity for each to-be-loaded station according to the target order task, where the to-be-loaded station is located in a production area, the production area includes a plurality of production stations, the to-be-loaded station is at least one of the plurality of production stations, and the first target material loading station is the to-be-loaded station; and if the quantity of to-be-loaded stations is equal to 1, determining the loading quantity for the to-be-loaded station as the first quantity; or if the quantity of to-be-loaded stations is greater than 1, calculating a sum of loading quantities for the to-be-loaded stations as the first quantity.

The loading quantity is the quantity of material loading containers required for the to-be-loaded station in the target order task.

During specific implementation, the server needs to first determine the quantity of to-be-loaded stations in the target order task. If there is only one to-be-loaded station, an obtained loading quantity for the to-be-loaded station is the first quantity of material loading containers that need to be loaded in the truck. If there are a plurality of to-be-loaded stations, loading quantities corresponding to the to-be-loaded stations are first obtained, and then the loading quantities corresponding to the to-be-loaded stations are added to obtain the first quantity corresponding to the target order task, that is, the quantity of material loading containers that need to be loaded when the truck is in the material storage area.

It can be learned that in this example, the first quantity is determined based on the quantity of to-be-loaded stations and the loading quantity corresponding to each to-be-loaded station, so that omission of the quantity of to-be-loaded stations and the quantity of material loading containers can be avoided, thereby ensuring reliability of controlling the traction robot by the server to transport the material.

In a possible example, before the controlling the traction robot to pull the truck to the first target material loading station corresponding to the target order task, the method further includes: determining locations of all to-be-loaded stations according to the target order task; and generating a moving route according to the locations of all the to-be-loaded stations, where the traction robot pulls the truck to each of the to-be-loaded stations according to the moving route.

The moving route is a preset trajectory in which the traction robot pulls the truck to move. Specifically, both a start point and an end point of the moving route may be in the material storage area, and the moving route includes a location of each to-be-loaded station in the target order task.

During specific implementation, the traction robot includes a positioning and navigation module. The server may pre-generate a moving route according to the target order task, and send the moving route to the positioning and navigation module of the traction robot, so that the traction robot can move along the generated moving route according to guidance of the positioning and navigation module under control of the server. Further, the traction robot may further include a scanning module. During movement, the traction robot may scan a surrounding spatial environment in real time by using the scanning module, and transmit a scanning result to the server, so that the server can update the moving route and generate a new moving route in real time when the spatial environment changes (for example, a roadblock occurs in a forward direction planned in the moving route), to avoid obstruction of movement of the traction robot.

It can be learned that in this example, the server controls the traction robot to pull the truck to move along the generated moving route, so that collision between the traction robot and an item in the environment can be avoided when the traction robot pulls the truck to move, and safety and reliability of pulling, by the traction robot, the truck to move can be ensured. In addition, in a case of a small site and a large quantity of running traction robots, the server properly generates a moving route for each traction robot through planning, which is beneficial to avoiding conflict in running routes of different traction robots, and can further improve efficiency of an entire transportation process while ensuring transportation safety.

In a possible example, after the controlling the traction robot to perform the transporting action, the method further includes: controlling, when the transporting action is completed, the traction robot to connect to the truck through the automated engage or disengage mechanism; and controlling, according to the moving route, the traction robot to pull the truck to move to a second target material loading station, or controlling the traction robot to pull the truck to return to the material storage area, where the second target material loading station is one of the to-be-loaded stations.

The second target material loading station is a next to-be-loaded station after the traction robot moves to the first target material loading station in the transportation process for the target order task, and the to-be-loaded stations included in the target order task may sequentially wait for transporting of material loading containers or empty containers according to the moving route of the traction robot.

During specific implementation, after the server controls the traction robot to complete transporting work of the material loading containers and the empty containers at the first target material loading station, the server needs to first determine whether there are other to-be-loaded stations waiting for transporting of material loading containers or empty containers in a remaining route of the moving route for the target order task. If there are other to-be-loaded stations, the traction robot connected to the truck is controlled to pull the truck to move to a next to-be-loaded station, that is, the second target material loading station. If there is no to-be-loaded station, the traction robot connected to the truck is controlled to pull the truck to return to the material storage area, so that the truck may unload the empty container in the material storage area and wait for next loading and transportation.

It can be learned that in this example, after the transporting action for the target material loading station is completed, the server controls the first traction robot to be reconnected to the truck, and controls, according to the moving route, the traction robot to pull the truck to move to the second target material loading station or the material storage area, so that the entire transportation process for the target order task can be performed in order, and it is ensured that a requirement of transporting the material loading container and the empty container for each to-be-loaded station included in the target order task can be met.

The connection between the traction robot and the truck is described below with reference to an example.

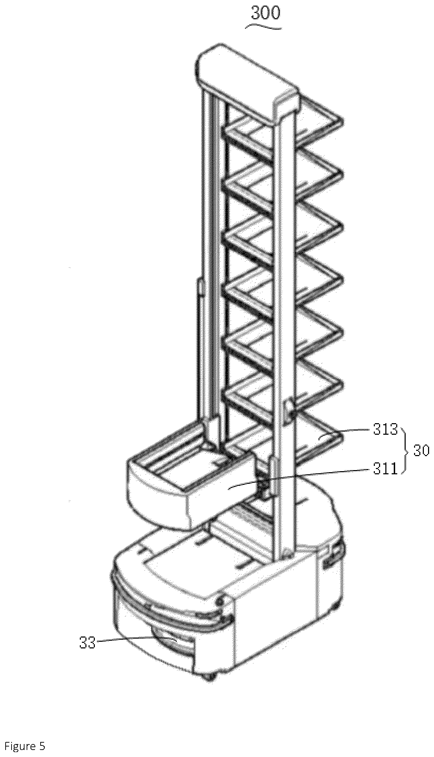

Referring to FIG. 5, a traction robot 300 includes a robot body 31 and an automated engage or disengage mechanism 33. The robot body 31 includes a support 315, a fork 311 configured to transport a material loading container or an empty container, and a plurality of temporary storage locations 313 used for placing the empty container or the material loading container. After transporting a material loading container from the truck or an empty container from the first target material loading station, the fork 311 may move along the support 315 to place the material loading container or the empty container on the temporary storage location 313.

Referring to FIG. 6, a truck 400 includes a truck body 41 and a connection frame 43 configured to connect to the automated engage or disengage mechanism 33. The truck body is configured to be loaded with a material loading container 51 and an empty container 53.

When the server controls the traction robot 300 to connect to the truck 400, the traction robot 300 may move to a location of the truck 400, and insert the connection frame 43 of the truck 400 into a groove in which the automated engage or disengage mechanism 33 is located in a moving process. When it is detected that the connection frame 43 is inserted into the right place, the automated engage or disengage mechanism 33 is started, so that the connection frame 43 and the automated engage or disengage mechanism 33 are connected, thereby ensuring that the traction robot 300 can pull the truck 400 to move. The groove can not only guide the connection frame 43 when the connection frame 43 is inserted, but also limit the connection frame 43, to prevent the connection frame 43 from falling off due to an excessively large shaking amplitude relative to the automated engage or disengage mechanism 33.

Further, the traction robot 300 may further include a positioning module. The positioning module may be a camera module, a positioning sensor, or the like. The traction robot 300 may detect, by using the positioning module, whether the connection frame 43 is inserted in place, to ensure reliability of the connection between the automated engage or disengage mechanism 33 and the connection frame 43.

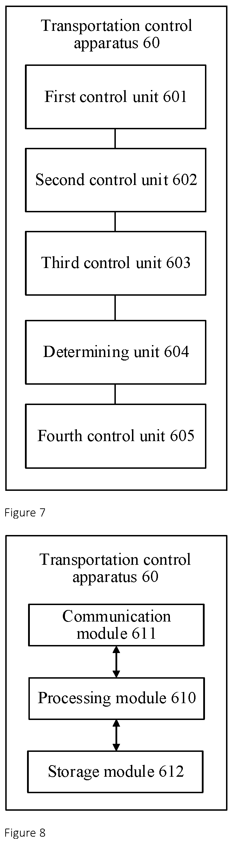

FIG. 7 is a component block diagram of functional units of a transportation control apparatus according to an embodiment of this application. The transportation control apparatus may be used in the server 100 shown in FIG. 1. The apparatus 60 includes:
a first control unit 601, configured to control, when receiving a target order task, the traction robot to connect to the truck in a material storage area through an automated engage or disengage mechanism, where the truck is loaded with a first quantity of material loading containers corresponding to the target order task;
a second control unit 602, configured to control, when detecting that the connection between the traction robot and the truck is completed, the traction robot to pull the truck to move to a first target material loading station corresponding to the target order task;
a third control unit 603, configured to control, when detecting that the traction robot has pulled the truck to the first target material loading station, the automated engage or disengage mechanism of the traction robot to disconnect from the truck;
a determining unit 604, configured to determine, according to the target order task, a transporting action of the traction robot for the first target material loading station and a required quantity of material loading containers or empty containers corresponding to the transporting action, where the transporting action includes transporting the required quantity of material loading containers from the truck to the first target material loading station, and/or transporting the required quantity of empty container from the first target material loading station to the truck; and
a fourth control unit 605, configured to control the traction robot to perform the transporting action.

In a possible example, the robot body includes a fork and a plurality of temporary storage locations, and the first target material loading station is provided with a first area for placing the material loading container and a second area for placing the empty container. The fourth control unit 605 is specifically configured to: control the traction robot to transport a second quantity of the material loading containers or the empty containers to the plurality of temporary storage locations through the fork, where the second quantity is less than or equal to a quantity of the temporary storage locations; and when the material loading containers are placed at the temporary storage locations of the traction robot, control the traction robot to move from a location of the truck to the first area, and control the traction robot to place the second quantity of the material loading containers in the first area through the fork; or when the empty containers are placed at the temporary storage locations of the traction robot, control the traction robot to move from the second area to a location of the truck, and control the traction robot to place the second quantity of the empty containers on the truck through the fork.

In a possible example, when the transporting action is transporting the required quantity of empty containers from the first target material loading station to the truck, in the aspect of determining, according to the target order task, the transporting action of the traction robot for the first target material loading station and the required quantity corresponding to the transporting action, the determining unit 604 is specifically configured to: determine a remaining capacity of the truck according to the target order task and a total capacity of the truck; and when the remaining capacity of the truck is greater than or equal to the quantity of empty containers at the first target material loading station, determine that the required quantity corresponding to the transporting action is the quantity of empty containers at the first target material loading station; or when the remaining capacity of the truck is less than a quantity of empty containers at the first target material loading station, determine that the required quantity corresponding to the transporting action is the remaining capacity of the truck.

In a possible example, the apparatus 60 further includes a first processing unit. Before being configured to control the traction robot to connect to the truck in the material storage area through the automated engage or disengage mechanism, the first processing unit is configured to determine the first quantity of material loading containers according to the target order task; and control the traction robot to transport the first quantity of material loading containers from a silo to the truck in the material storage area.

In a possible example, in the aspect of determining the first quantity of material loading containers according to the target order task, the first control unit 601 is specifically configured to: obtain the quantity of to-be-loaded stations and a loading quantity for each to-be-loaded station according to the target order task, where the to-be-loaded station is located in a production area, the production area includes a plurality of production stations, the to-be-loaded station is at least one of the plurality of production stations, and the first target material loading station is the to-be-loaded station; and if the quantity of to-be-loaded stations is equal to 1, determine a loading quantity for the to-be-loaded station as the first quantity; or if the quantity of to-be-loaded stations is greater than 1, calculate a sum of loading quantities for the to-be-loaded stations as the first quantity.

In a possible example, the apparatus 60 further includes a second processing unit. Before being configured to control the traction robot to pull the truck to the first target material loading station corresponding to the target order task, the second processing unit is configured to determine locations of all to-be-loaded stations according to the target order task; and generate a moving route according to the locations of all the to-be-loaded stations, where the traction robot pulls the truck to each of the to-be-loaded stations according to the moving route.

In a possible example, the apparatus 60 further includes a third processing unit. After being configured to control the traction robot to perform the transporting action, the third processing unit is configured to control, when the transporting action is completed, the traction robot to connect to the truck through the automated engage or disengage mechanism; and control, according to the moving route, the traction robot to pull the truck to move to a second target material loading station, or control the traction robot to pull the truck to return to the material storage area, where the second target material loading station is one of the to-be-loaded stations.

When an integrated unit is used, functional units of another transportation control apparatus provided in an embodiment of this application constitute a block diagram, which is shown in FIG. 8. In FIG. 8, the transportation control apparatus 60 includes: a processing module 610 and a communication module 611. The processing module 610 is configured to perform control and management on an action of the transportation control apparatus 60, for example, steps performed by the first control unit 601 and the second control unit 602, and/or configured to perform another process of the technology described in this application. The communication module 611 is configured to support interaction between the transportation control apparatus 60 and another device. As shown in FIG. 6B, the transportation control apparatus 60 may further include a storage module 612. The storage module 612 is configured to store program code and data of the transportation control apparatus 60.

The processing module 610 may be a processor or a controller, for example, may be a central processing unit (Central Processing Unit, CPU), a general purpose processor, a digital signal processor (Digital Signal Processor, DSP), an ASIC, an FPGA, or another programmable logic device, a transistor logic device, a hardware component, or any combination thereof. The processing module may implement or execute various example logical blocks, modules, and circuits described with reference to content disclosed in this application. The processor may alternatively be a combination implementing a computing function, for example, a combination including one or more microprocessors, or a combination of a DSP and a microprocessor. The communication module 611 may be a transceiver, an RF circuit, a communication interface, or the like. The storage module 612 may be a memory.

For all related content of the scenarios in the foregoing method embodiments, refer to function descriptions of corresponding functional modules. Details are not described herein again. Each of the foregoing transportation control apparatuses may perform the steps performed by the server in the foregoing transportation control method shown in FIG. 4.

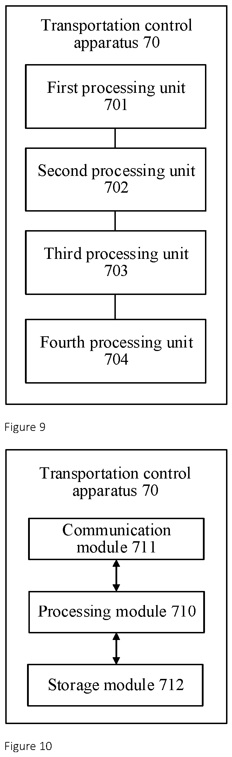

FIG. 9 is a component block diagram of functional units of a transportation control apparatus according to an embodiment of this application. The transportation control apparatus may be used in the traction robot 300 shown in FIG. 1. The apparatus 70 includes:
a first processing unit 701, configured to connect to a truck through an automated engage or disengage mechanism according to control of a server, where the truck is loaded with a first quantity of material loading containers corresponding to a target material loading order;
a second processing unit 702, configured to pull, according to control of the server, the truck to move to a first target material loading station corresponding to the target material loading order;
a third processing unit 703, configured to: when the truck has been pulled to the first target material loading station, disconnect the automated engage or disengage mechanism from the truck according to control of the server; and
a fourth processing unit 704, configured to perform the transporting action according to control of the server, where the transporting action includes transporting a container quantity of material loading containers corresponding to the transporting action from the truck to the first target material loading station, and/or transporting a container quantity of empty containers corresponding to the transporting action from the first target material loading station to the truck.

When an integrated unit is used, functional units of another transportation control apparatus provided in an embodiment of this application constitute a block diagram, which is shown in FIG. 10. In FIG. 10, the transportation control apparatus 70 includes: a processing module 710 and a communication module 711. The processing module 710 is configured to perform control and management on an action of the transportation control apparatus 70, for example, steps performed by the first processing unit 701 and the second processing unit 702, and/or configured to perform another process of the technology described in this application. The communication module 711 is configured to support interaction between the transportation control apparatus 70 and another device. As shown in FIG. 10, the transportation control apparatus 70 may further include a storage module 712. The storage module 712 is configured to store program code and data of the transportation control apparatus 70.

The processing module 710 may be a processor or a controller, for example, may be a central processing unit (Central Processing Unit, CPU), a general purpose processor, a digital signal processor (Digital Signal Processor, DSP), an ASIC, an FPGA, or another programmable logic device, a transistor logic device, a hardware component, or any combination thereof. The processing module may implement or execute various example logical blocks, modules, and circuits described with reference to content disclosed in this application. The processor may alternatively be a combination implementing a computing function, for example, a combination including one or more microprocessors, or a combination of a DSP and a microprocessor. The communication module 711 may be a transceiver, an RF circuit, a communication interface, or the like. The storage module 712 may be a memory.

For all related content of the scenarios in the foregoing method embodiments, refer to function descriptions of corresponding functional modules. Details are not described herein again. Each of the transportation control apparatuses may perform the steps performed by the traction robot in the foregoing transportation control method shown in FIG. 4.

An embodiment of this application further provides a computer storage medium. The computer storage medium stores a computer program for electronic data exchange. The computer program causes a computer to perform some of all of the steps in any method described in the foregoing method embodiments.

An embodiment of this application further provides a computer program product, including a computer program. The computer program, when being executed by a processor, implements some or all of the steps in any method described in the foregoing method embodiments. The computer program product may be a software installation package.

It should be noted that, for brief description, the foregoing method embodiments are redisplayed as a series of action combinations. However, a person skilled in the art is to appreciate that this application is not limited to the described order of the actions, because according to this application, some steps may be performed in other orders or simultaneously. Secondly, it should be further appreciated by a person skilled in the art that the embodiments described in this specification all belong to preferred embodiments, and the involved actions and units are not necessarily required by this application.

In the foregoing embodiments, description of each embodiment focuses on a different part, and for parts that are not described in detail in one embodiment, reference may be made to the related description of other embodiments.

In the several embodiments provided in this application, it should be understood that the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage. Based on such an understanding, the technical solutions of this application essentially, or the part contributing to the existing technologies, or the entire or some of the technical solutions may be implemented in a form of a software product. The computer software product is stored in a storage medium and includes several instructions for instructing one or more computer devices (which may be a personal computer, a server, a network device, or the like) to perform all or some of the steps of the methods described in the embodiments of this application. The foregoing storage includes: any medium that can store program code, such as a USB flash drive, a read-only memory (ROM, Read-Only Memory), a random access memory (RAM, Random Access Memory), a removable hard disk, a magnetic disk, or a compact disc.

A person of ordinary skill in the art may understand that all or some of the steps of the methods in the embodiments may be implemented by a program instructing relevant hardware. The program may be stored in a computer-readable storage. The storage may include a flash drive, a read-only memory (English: Read-Only Memory, ROM for short), a random access memory (English: Random Access Memory, RAM for short), a magnetic disk, a compact disc, and the like.

The embodiments of this application are described in detail above. The principles and implementations of this application are described through specific examples in this application, and the descriptions of the embodiments are only intended to help understand the methods and core ideas of this application. Meanwhile, a person of ordinary skill in the art may make modifications to the specific implementations and application scopes according to the ideas of this application. In conclusion, the content of the specification should not be construed as a limitation to this application.

## Claims

1. A transportation control method, appliable to a server, wherein the server is configured to control a traction robot, the traction robot comprises a robot body configured to transport a container and an automated engage or disengage mechanism configured to detachably connect to a truck, the method comprising:
controlling, when receiving a target order task, the traction robot to connect to the truck in a material storage area through the automated engage or disengage mechanism, wherein the truck is loaded with a first quantity of material loading containers corresponding to the target order task;
controlling, when detecting that the connection between the traction robot and the truck is completed, the traction robot to pull the truck to move to a first target material loading station corresponding to the target order task;
controlling, when detecting that the traction robot has pulled the truck to the first target material loading station, the automated engage or disengage mechanism of the traction robot to disconnect from the truck;
determining, according to the target order task, a transporting action of the traction robot for the first target material loading station and a required quantity of material loading containers or empty containers corresponding to the transporting action, wherein the transporting action comprises transporting the required quantity of material loading containers from the truck to the first target material loading station, and/or transporting the required quantity of empty containers from the first target material loading station to the truck; and
controlling the traction robot to perform the transporting action.

2. The method according to claim 1, wherein the robot body comprises a fork and a plurality of temporary storage locations, the first target material loading station is provided with a first area for placing the material loading container and a second area for placing the empty container, and the controlling the traction robot to perform the transporting action comprises:
controlling the traction robot to transport a second quantity of the material loading containers or the empty containers to the plurality of temporary storage locations through the fork, wherein the second quantity is less than or equal to a quantity of the temporary storage locations; and
when the material loading containers are placed at the temporary storage locations of the traction robot, controlling the traction robot to move from a location of the truck to the first area, and controlling the traction robot to place the second quantity of the material loading containers in the first area through the fork; or
when the empty containers are placed at the temporary storage locations of the traction robot, controlling the traction robot to move from the second area to a location of the truck, and controlling the traction robot to place the second quantity of the material loading containers on the truck through the fork.

3. The method according to claim 1, wherein when the transporting action is transporting the required quantity of empty containers from the first target material loading station to the truck, the determining, according to the target order task, the transporting action of the traction robot for the first target material loading station and the container quantity corresponding to the transporting action comprises:
determining a remaining capacity of the truck according to the target order task and a total capacity of the truck; and
when the remaining capacity of the truck is greater than or equal to the quantity of empty containers at the first target material loading station, determining that the container quantity corresponding to the transporting action is the quantity of empty containers at the first target material loading station; or
when the remaining capacity of the truck is less than the quantity of empty containers at the first target material loading station, determining that the container quantity corresponding to the transporting action is the remaining capacity of the truck.

4. The method according to claim 1, wherein before the controlling the traction robot to connect to the truck in the material storage area through the automated engage or disengage mechanism, the method comprises:
determining the first quantity of material loading containers according to the target order task; and
controlling the traction robot to transport the first quantity of material loading containers from a silo to the truck in the material storage area.

5. The method according to claim 4, wherein the determining the first quantity of material loading containers according to the target order task comprises:
obtaining the quantity of to-be-loaded stations and a loading quantity for each to-be-loaded station according to the target order task, wherein the to-be-loaded station is located in a production area, the production area comprises a plurality of production stations, the to-be-loaded station is at least one of the plurality of production stations, and the first target material loading station is the to-be-loaded station; and
if the quantity of to-be-loaded stations is equal to 1, determining a loading quantity for the to-be-loaded station as the first quantity; or
if the quantity of to-be-loaded stations is greater than 1, calculating a sum of loading quantities for the to-be-loaded stations as the first quantity.

6. The method according to claim 1, wherein before the controlling the traction robot to pull the truck to the first target material loading station corresponding to the target order task, the method further comprises:
determining locations of all to-be-loaded stations according to the target order task; and
generating a moving route according to the locations of all the to-be-loaded stations, wherein the traction robot pulls the truck to each of the to-be-loaded stations according to the moving route.

7. The method according to claim 6, wherein after the controlling the traction robot to perform the transporting action, the method further comprises:
controlling, when the transporting action is completed, the traction robot to connect to the truck through the automated engage or disengage mechanism; and
controlling, according to the moving route, the traction robot to pull the truck to move to a second target material loading station, or controlling the traction robot to pull the truck to return to the material storage area, wherein the second target material loading station is one of the to-be-loaded stations.

8. A transportation control method, appliable to a traction robot, wherein the traction robot is provided with an automated engage or disengage mechanism, the method comprising:
connecting to a truck through an automated engage or disengage mechanism according to control of a server, wherein the truck is loaded with a first quantity of material loading containers corresponding to a target material loading order;
pulling, according to control of the server, the truck to move to a first target material loading station corresponding to the target material loading order;
when the truck has been pulled to the first target material loading station, disconnecting the automated engage or disengage mechanism from the truck according to control of the server; and
performing a transporting action according to control of the server, wherein the transporting action comprises transporting a required quantity of material loading containers corresponding to the transporting action from the truck to the first target material loading station, and/or transporting a required quantity of empty containers corresponding to the transporting action from the first target material loading station to the truck.

9. A transportation control apparatus, used in a server, the apparatus comprising:
a first control unit, configured to control, when receiving a target order task, the traction robot to connect to the truck in a material storage area through an automated engage or disengage mechanism, wherein the truck is loaded with a first quantity of material loading containers corresponding to the target order task;
a second control unit, configured to control, when detecting that the connection between the traction robot and the truck is completed, the traction robot to pull the truck to move to a first target material loading station corresponding to the target order task;
a third control unit, configured to control, when detecting that the traction robot has pulled the truck to the first target material loading station, the automated engage or disengage mechanism of the traction robot to disconnect from the truck;
a determining unit, configured to determine, according to the target order task, a transporting action of the traction robot for the first target material loading station and a required quantity of material loading containers or empty containers corresponding to the transporting action, wherein the transporting action comprises transporting the required quantity of material loading containers from the truck to the first target material loading station, and/or transporting the required quantity of empty containers from the first target material loading station to the truck; and
a fourth control unit, configured to control the traction robot to perform the transporting action.

10. A transportation control apparatus, used in a traction robot, the apparatus comprising:
a first processing unit, configured to connect to a truck through an automated engage or disengage mechanism according to control of a server, wherein the truck is loaded with a first quantity of material loading containers corresponding to a target material loading order;
a second processing unit, configured to pull, according to control of the server, the truck to move to a first target material loading station corresponding to the target material loading order;
a third processing unit, configured to: when the truck has been pulled to the first target material loading station, disconnect the automated engage or disengage mechanism from the truck according to control of the server; and
a fourth processing unit, configured to perform the transporting action according to control of the server, wherein the transporting action comprises transporting a required quantity of material loading containers corresponding to the transporting action from the truck to the first target material loading station, and/or transporting a required quantity of empty containers corresponding to the transporting action from the first target material loading station to the truck.

11. A server, comprising a processor, a memory, a communication interface, and one or more programs, wherein the one or more programs are stored in the memory and are configured to be executed by the processor, and the program comprises instructions for performing steps in the method according to any one of claims 1 to 7.

12. A traction robot, comprising a processor, a memory, a communication interface, and one or more programs, wherein the one or more programs are stored in the memory and are configured to be executed by the processor, and the program comprises instructions for performing steps in the method according to claim 8.

13. A computer-readable storage medium, storing a computer program for electronic data exchange, wherein the computer program causes a computer to perform the method according to any one of claims 1 to 7 or the method according to claim 8.
